# EUROPEAN PATENT SPECIFICATION

(11) **EP 2 647 314 B1**
(45) Date of publication and mention of the grant of the patent: **27.05.2015**
(21) Application number: 13156936.0
(22) Date of filing: 27.02.2013
(51) Int. Cl.: A47F 7/06, A45D 44/14

(54) **A manikin holder**
Modellpuppenhalter
Support de mannequin

(30) Priority: 05.04.2012 KR 20120035286
(43) Date of publication of application: 09.10.2013
(73) Proprietor: Jung, Tae Bong, Seoul 137-904 (KR)
(72) Inventor: Jung, Tae Bong, Seoul 137-904 (KR)
(74) Representative: Øen, Petter

(56) References cited:
- GB-A- 1 206 104
- JP-A- H07 134 543
- JP-A- 2011 036 546
- US-A- 3 424 419
- US-A- 3 448 957
- US-A- 3 934 804

## Description

### TECHNICAL FIELD OF THE INVENTION

The present invention relates to a manikin holder, and more particularly to a manikin holder which is configured to insert into a securing bore in the manikin to hold the manikin noiselessly and stably.

### BACKGROUND OF THE INVENTION

Conventionally, the manikin is used for hairstyle training course in the hairdressing school and etc.

The manikin is generally provided with a headform and wigs implanted therein so that hairstyle trainees can practice the designed hairdos, for which a securing means is necessary to fix the manikin on the working platform.

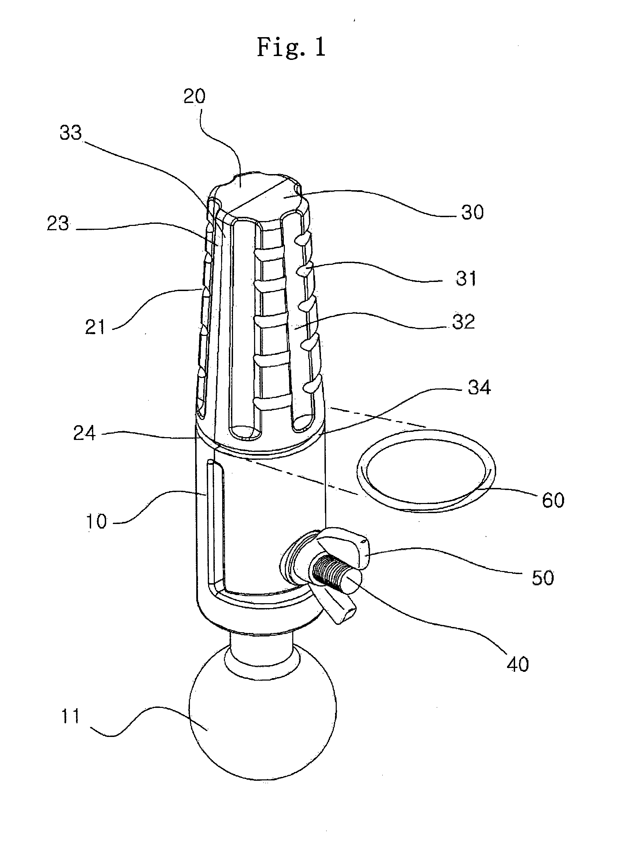

A conventional holder for securing the manikin on the working platform is shown in Fig.1.

The body 10 of a holder is connected at its lower portion with a clamp 3 by a ball joint 11 so that the body 10 is secured on the working platform 4 in a vertical state. A stationary bolt rod 20 and a movable bolt rod 30 formed integrally with the body 10 is inserted into a securing bore 2.

A locking nut 50 is screwed to a fastening bolt 40 and exposes outside the body 10. The stationary bolt rod 20 and the movable bolt rod 30 can be separated by screwing down the locking nut 50 so as to tightly bear against the inner wall of the securing bore 2 to secure the manikin 1.

To prevent sliding, a plurality of horizontal grooves 21, 31 are provided on the peripheral surface of the stationary bolt rod 20 and the movable bolt rod 30.

Such holders are also known from US 393 4804 and GB 1206104.

### SUMMARY OF THE INVENTION

Such a manikin, however, has a defect in that the securing bore at the bottom of the manikin may not have a uniform shape and size.

Moreover, the body of the holder used for securing the manikin is mainly made of metallic material and thus has a smooth surface. Therefore, the smooth surface of the holder cannot be tightly and completely attached to the manikin during hairstyle practice.

Further, the manikin will frequently release from its fixed state due to impacts or vibrations during hairstyle practice, which will render dissatisfaction of the trainees.

Moreover, the manikin is likely to shake due to existence of a slight gap between the stationary bolt or movable bolt of the holder and the manikin, which may generate a noise and thus distracts trainees.

To overcome the above defects, an object of the present invention is to provide a manikin holder which can avoid such a gap and noise caused by a small shock or impact when holding the manikin, thus ensuring a more stable stationary state of the manikin.

Another object of the present invention is to provide a manikin holder which makes it easy for users to operate and concentrate on hairstyle practice.

In order to achieve the above objects, a manikin holder according to the present invention comprises:
- a body, a lower portion of which having a ball joint that is rotatably connected to a clamp, and an upper portion of which being integrated with a stationary bolt rod of half cylinder shape, horizontal grooves being repeatedly formed on the stationary bolt rod;
- a movable bolt rod of half cylinder shape, which is in close contact with the stationary bolt rod, with horizontal grooves being formed thereon;
- a fastening bolt penetrating through the stationary bolt rod and the movable bolt rod;
- a locking nut positioned outside of the movable bolt rod and screwing down the fastening bolt;
- grooves formed in the stationary bolt rod and the movable bolt rod for being clamped by an elastic seal ring;
- two pairs of mounting grooves spaced from each other along flanges of the stationary bolt rod and the movable bolt rod ; and
- an elastic ring elastically mounted on the mounting grooves.

According to the invention disclosed above, one or two elastic rings is/are provided to elastically bind the peripheral surface of the stationary bolt rod and movable bolt rod. The elastic rings are tightly and elastically clamped within the securing bore when the movable bolt rod is separated from the stationary bolt rod for fixing the manikin.

Therefore, a loosening of the fixed state or movement of the manikin as well as the generation of noise can be prevented even through a shock or occurs frequently during the hairstyle practice.

Moreover, as manikins made by various manufacturers may have different shape and size, the tolerance rendered thereby can be compensated by the elastic rings around the stationary bolt rod and movable bolt rod, which stably maintains manikins having securing holes of various shape and size on the holder in a stationary state for a long time.

The holder according to the invention can thus facilitate the users to operate and concentrate on the hairstyle practice.

### BRIEF DESCRIPTION OF THE DRAWINGS

Fig.1 is a perspective view of a conventional manikin holder;

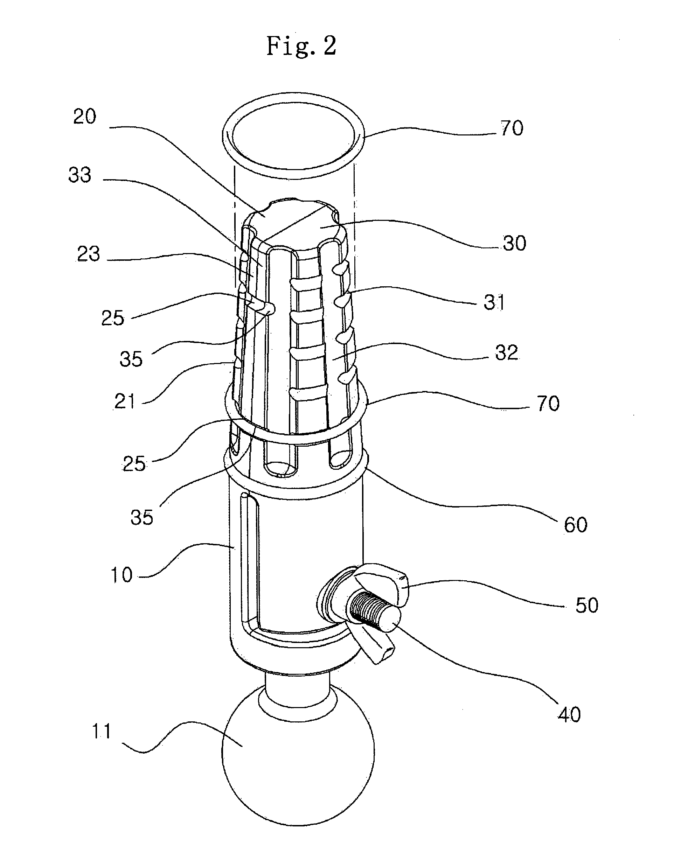

Fig.2 is a perspective view of a manikin holder according to the present invention, from which an elastic ring is separated;
Fig.3 is a partial cross-sectional view of the holder of Fig.2 showing a state of the holder before securing the manikin;
Fig.4 is a partial cross-sectional view of the holder of Fig. 2, wherein the stationary bolt rod and the movable bolt rod are separated so that the manikin is in the fixed state;

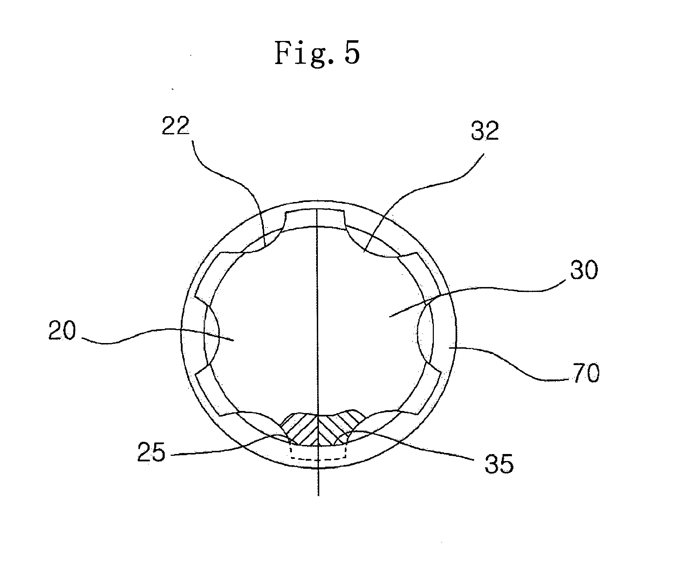

Fig.5 is a plan view of the holder of Fig.3.
Fig.6 is a plan view of the holder of Fig.4.

### Reference signs in the drawings:

| | |
|---|---|
| 1 - manikin | 2 - securing bore |
| 3 - clamp | 10 - body |
| 11 - ball joint | 20 - stationary bolt rod |
| 21 - horizontal groove | 23 - flange |
| 25 - mounting grooves | 30 - movable bolt rod |
| 31 - horizontal groove | 33 - flange |
| 35 - mounting groove | 40 - fastening bolt |
| 50 - locking nut | 60 - elastic seal ring |
| 70 - elastic ring | |

### DETAILED DESCRIPTION OF EMBODIMENTS

Embodiments of the invention will be set forth in the following description by referring to the attached drawings.

The present invention relates to a holder for securing manikin 1 to a working platform for trainees of hairdressing schools.

The body 10 of the holder 1 is made of metallic material for keeping its intensity. The lower portion of the body 10 is integrated with a ball joint which is screwed into a clamp 3.

The ball joint 11 has a spherical shape so as to be omnidirectionally rotatable when it is tightly screwed in the clamp 3.

The clamp 3 is immovable and able to secure the body 10 at any position after being screwed on the working platform by a locking bolt 5, which is the same as in the prior art.

An upper portion of the body 10 is integrated with a stationary bolt rod 20 which has a shape of half cylinder or half truncated cone on which a plurality of horizontal grooves 21 are repeatedly formed.

A plurality of vertical grooves 22 are formed to intersect with the horizontal grooves 21.

The stationary bolt rod 20 clings to the movable bolt rod 30 to form an integral upper portion of the holder which has a cylindrical or truncated conical shape.

The movable bolt rod 30 is made of the same metallic material as the body 10 and formed into the shape of a half cylinder or a half truncated cone corresponding to the stationary bolt rod 20. A plurality of horizontal grooves 31 are repeatedly formed on the peripheral surface of the movable bolt rod 30.

A plurality of vertical grooves 32 are formed to intersect with the horizontal grooves 31 on the movable bolt rod 30.

The lower portion of the stationary bolt rod 20 and the movable bolt rod 30 are penetrated by a fastening bolt 40.

The head of the fastening bolt 40 is clamped within the stationary bolt rod 20, and is screwed tightly with the screw portion extending outside the body 10 by a locking nut 50 to prevent the fastening bolt 40 from rotating.

Moreover, the stationary bolt rod 20 and the movable bolt rod 30 are provided with a groove 24 and a groove 34 respectively, around which an elastic seal ring 60 can be placed so that the movable bolt rod 30 can be tightly pressed against the stationary bolt rod 20, thus maintaining a screwing down state.

The elastic seal ring 60 is made of metallic material having a good elasticity, such as spring steel, and formed into the shape of ring.

The main structural features of the invention are: providing one or a plurality of elastic rings 70 with a diameter larger than that of the stationary bolt rod 20 and of the movable bolt rod 30. This arrangement makes the holder secured within the securing bore 2 of the manikin 1 in a non-spacing and elastic fixing state.

One or more flanges 23, 33 are formed lengthwise on both sides of the interface between the stationary bolt rod 20 and the movable bolt rod 30. One or more mounting grooves 25, 35 are formed on the flanges 23, 33 in alignment with the horizontal grooves 21, 31, respectively.

An elastic ring 70 is provided around the mounting grooves 25, 35.

The elastic ring 70 having a cross-sectional "O" shape is elastically arranged on the mounting grooves 25, 35. The external diameter of the elastic ring 70 is larger than that of a combination of the stationary bolt rod 20 and the movable bolt rod 30 appressed together.

Two mounting grooves 25 are formed to be spaced with a certain distance along the flange 23 of the stationary bolt rod 20, and two mounting grooves 35 are formed to be spaced with a certain distance along the flange 33 of the movable bolt rod 30. Two elastic rings 70 are elastically arranged on the mounting grooves 25, 35 so as to prevent the stationary bolt rod 20 and the movable bolt rod 30 from moving, thus maintaining them in a stable stationary state.

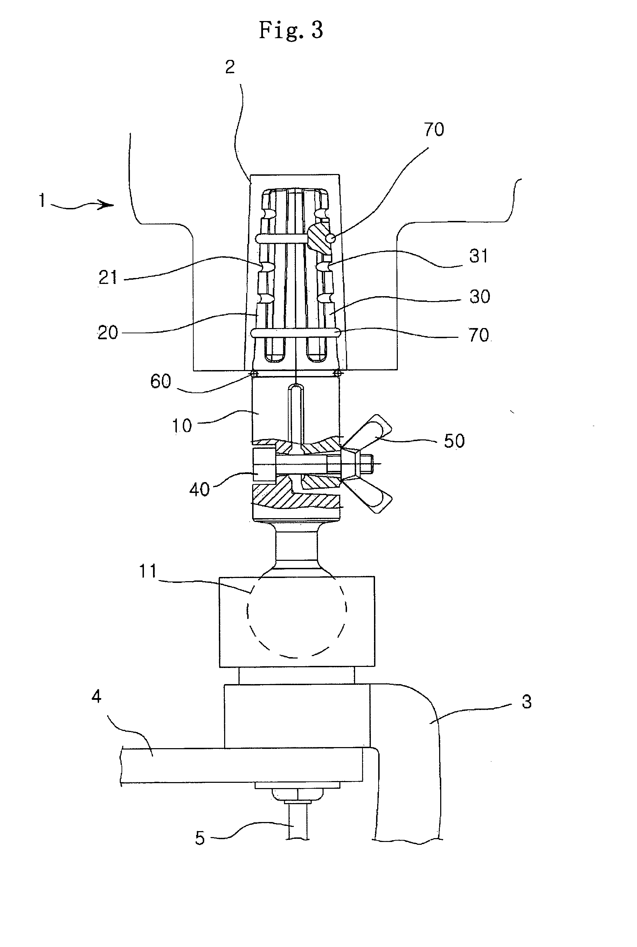

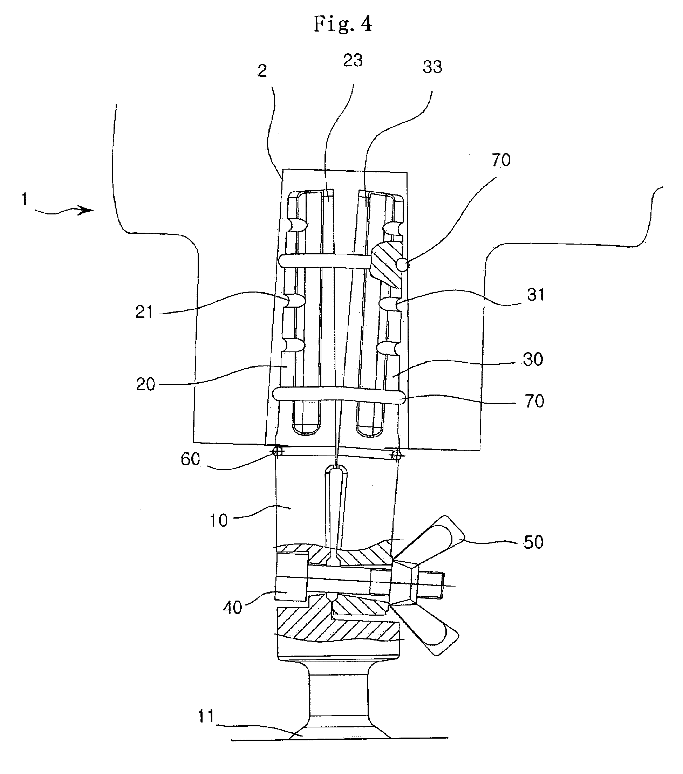

As shown in Fig. 3 and Fig. 4, after the two elastic rings 70 are respectively put on the mounting grooves 25 of the stationary bolt rod 20 and the mounting grooves 35 of the movable bolt rod 30, the stationary bolt rod 20 and the movable bolt rod 30 can maintain close bearing against each other when positioned in the securing bore 2 at bottom of the manikin 1.

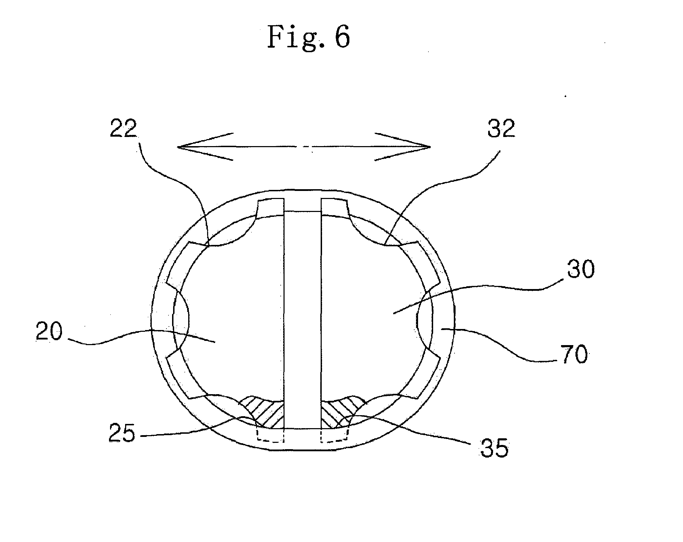

Additionally, after the stationary bolt rod 20 and the movable bolt rod 30 are pressed together, which forms an integral shape of a cylinder or truncated cone, and are clamped within the securing bore 2, the locking nut 50 is screwed down for fixation, which causes the separation between the upper end of the stationary bolt rod 20 and that of the movable bolt rod 30, as shown in Fig.4 and Fig. 6.

The elastic rings 70 provided respectively on the two pairs of mounting grooves 25, 35 of the stationary bolt rod 20 and the movable bolt rod 30 can keep an increasing elasticity when enlarged and bear elastically against the inner wall of the securing bore 2.

With these elastic rings 70, a stable force for a tight fixation between the securing bore 2 and the stationary bolt rod 20 and movable bolt rod 30 can be maintained elastically.

Additionally, even through the securing bore 2 of the manikins 1 made by different manufacturers may have different shape and size, the elastic rings 70 could compensate the tolerance caused thereby and fix stably the manikin 1.

Moreover, even through impacts or shocks occur frequently during the hairstyle practice, noise caused by loosening of the fastening state or movement of the manikin can be prevented by the elastic rings 70.

## Claims

1. A manikin holder comprising:
- a body (10), a lower portion of which having a ball joint (11) that is rotatably connected to a clamp (3), and an upper portion of which being integrated with a stationary bolt rod (20) of half cylinder shape, horizontal grooves (21) being repeatedly formed on the stationary bolt rod (20);
- a movable bolt rod (30) of half cylinder shape a, which is in close contact with the stationary bolt rod (20) and formed therein horizontal grooves (31);
- a fastening bolt (40) penetrating through the stationary bolt rod (20) and the movable bolt rod (30);
- a locking nut (50) positioned outside of the movable bolt rod (30) and screwing down the fastening bolt (40);
- grooves (24, 34) formed in the stationary bolt rod (20) and the movable bolt rod (30) respectively for being clamped by an elastic seal ring (60); **characterized by**
- two pairs of mounting grooves (25, 35) spaced from each other along flanges (23, 33) of the stationary bolt rod (20) and the movable bolt rod (30); and
- elastic rings (70) elastically mounted on the mounting grooves (25, 35).

## Patentansprüche

1. Modellpuppenhalter, umfassend:
- einen Körper (10), von dem ein unterer Abschnitt ein Kugelgelenk (11) aufweist, das drehbar mit einer Klemme (3) verbunden ist, und von dem ein oberer Abschnitt mit einer stationären Ankerstange (20) mit Halbzylinderform integriert ist, wobei horizontale Nuten (21) wiederholt an der stationären Ankerstange (20) ausgebildet sind;
- eine bewegliche Ankerstange (30) mit Halbzylinderform, die in engem Kontakt mit der stationären Ankerstange (20) steht und in der horizontale Nuten (31) ausgebildet sind;
- einen Befestigungsbolzen (40), der durch die stationäre Ankerstange (20) und die bewegliche Ankerstange (30) hindurchtritt;
- eine Sicherungsmutter (50), die außerhalb der beweglichen Ankerstange (30) positioniert ist und auf den Befestigungsbolzen (40) aufgeschraubt wird;
- Nuten (24, 34), die in der stationären Ankerstange (20) bzw. der beweglichen Ankerstange (30) ausgebildet sind, um durch einen elastischen Dichtungsring (60) eingespannt zu werden; **gekennzeichnet durch**
- zwei Paare von Befestigungsnuten (25, 35), die entlang Flanschen (23, 33) der stationären Ankerstange (20) und der beweglichen Ankerstange (30) voneinander beabstandet sind; und
- elastische Ringe (70), die elastisch auf den Befestigungsnuten (25, 35) angebracht sind.

## Revendications

1. Support de mannequin comprenant :
- un corps (10), dont une portion inférieure présente un joint à rotule (11) qui est connecté à rotation à une pince (3), et dont une portion supérieure est intégrée à une tige de boulon stationnaire (20) de forme semi-cylindrique, des gorges horizontales (21) étant formées de manière récurrente sur la tige de boulon stationnaire (20) ;
- une tige de boulon mobile (30) de forme semi-cylindrique a, qui est en contact immédiat avec la tige de boulon stationnaire (20) et dans laquelle sont formées des gorges horizontales (31) ;
- un boulon de fixation (40) pénétrant à travers la tige de boulon stationnaire (20) et la tige de boulon mobile (30) ;
- un écrou de verrouillage (50) positionné à l'extérieur de la tige de boulon mobile (30) et se vissant sur le boulon de fixation (40) ;
- des gorges (24, 34) formées dans la tige de boulon stationnaire (20) et la tige de boulon mobile (30) respectivement, destinées à être serrées par une bague d'étanchéité élastique (60) ; **caractérisé par**
- deux paires de gorges de montage (25, 35) espacées les unes des autres le long de brides (23, 33) de la tige de boulon stationnaire (20) et de la tige de boulon mobile (30) ; et
- des bagues élastiques (70) montées élastiquement sur les gorges de montage (25, 35) .
